# EUROPEAN PATENT APPLICATION

(11) **EP 4 786 919 A1**
(43) Date of publication of application: **05.08.2026**
(21) Application number: 26154749.1
(22) Date of filing: 28.01.2026
(51) Int. Cl.: G01B 11/25, G01B 21/04

(54) **METHODS AND DEVICES FOR REMOVING THE EFFECTS OF VIBRATION IN AN IMAGING-BASED PROFILER**

(30) Priority: 29.01.2025 US 202519040474
(71) Applicant: Zebra Technologies Corporation, Lincolnshire, IL 60069 (US)
(72) Inventor: Doyon, Michel, Lincolnshire, 60069 (US); Christopher, Hirst, Lincolnshire, 60069 (US)
(74) Representative: LKGLOBAL Partnerschaftsgesellschaft mbB

(57) **Abstract**

Methods and devices for removing the effects of vibration in an imaging-based profiler are disclosed herein. An example method includes capturing, by an imaging-based profiler, a set of image data representing a profile of at least one of an object and a background region and determining whether a dimensional value of a portion of the profile deviates from a reference value, the reference value being determined using one or more sets of image data captured by the imaging-based profiler. Responsive to determining the dimensional value of the portion of the profile deviates from the reference value, the example method further includes adjusting the set of image data representing the profile based on a magnitude of the deviation from the reference value, outputting the adjusted set of image data, and constructing a three-dimensional (3D) model based on the adjusted set of image data.

## Description

### BACKGROUND

Machine vision technologies provide a means for image-based inspection and analysis for applications ranging from automatic part inspection, process control, robotic guidance, part identification, barcode reading, and many others. Machine vision technologies rely on capturing and processing images for performing specific analyses or tasks which often require both the integrated use of imaging systems as well as processing systems. For example, machine vision technologies may capture and process images to perform three-dimensional (3D) profiling of an object (e.g., 3D measurement and/or reconstruction of the object).

### SUMMARY

In some aspects, the techniques described herein relate to a method, including: capturing, by an imaging-based profiler, a set of image data representing a profile of at least one of an object and a background region; determining, by the imaging-based profiler, whether a dimensional value of a portion of the profile deviates from a reference value, the reference value being determined using one or more sets of image data captured by the imaging-based profiler; responsive to determining the dimensional value of the portion of the profile deviates from the reference value, adjusting, by the imaging-based profiler, the set of image data representing the profile based on a magnitude of the deviation from the reference value; and outputting, by the imaging-based profiler, the adjusted set of image data; and optionally constructing a three-dimensional (3D) model based on the adjusted set of image data.

In some aspects, the techniques described herein relate to a method, wherein the imaging-based profiler captures the set of image data at an initiation of an imaging session, the portion of the profile is a first portion, and the method further includes: determining, by the imaging-based profiler, the reference value based on a second portion of the profile.

In some aspects, the techniques described herein relate to a method, wherein the imaging-based profiler captures the set of image data during an imaging session, the set of image data is a current set of image data, the one or more sets of image data is a plurality of sets of image data, and the method further includes: determining, by the imaging-based profiler, the reference value based on an average value associated with background regions of the plurality of sets of image data, wherein the plurality of sets of image data does not include the current set of image data.

In some aspects, the techniques described herein relate to a method, wherein the imaging-based profiler captures the set of image data during an imaging session, and the method further includes: determining, by the imaging-based profiler during the imaging session, whether a captured set of image data includes a respective background region; responsive to determining that the captured set of image data is a first set of image data to include a respective background region during the imaging session, determining, by the imaging-based profiler, the reference value based on the respective background region.

In some aspects, the techniques described herein relate to a method, wherein the imaging-based profiler captures the set of image data during a first imaging session, and the imaging-based profiler captures the one or more sets of image data during a second imaging session that is different from the first imaging session.

In some aspects, the techniques described herein relate to a method, wherein the dimensional value corresponds to a dimension, and determining whether the dimensional value of the portion of the profile deviates from the reference value further includes: determining, by the imaging-based profiler, the background region of the profile based on a dimensional range corresponding to the dimension, the dimensional range including pixels of the set of image data associated with the background region; and determining, by the imaging-based profiler, the dimensional value of the portion using image data from the set of image data that is included within the dimensional range.

In some aspects, the techniques described herein relate to a method, wherein the dimensional value corresponds to a first dimension, and the dimensional range corresponds to a second dimension that is different from the first dimension.

In some aspects, the techniques described herein relate to a method, wherein determining the dimensional value further includes: determining, by the imaging-based profiler, the dimensional value based on (i) an average value of the portion within the dimensional range or (ii) a single value of the portion within the dimensional range.

In some aspects, the techniques described herein relate to a method, further including: determining, by the imaging-based profiler, a tilt value of the background region based on variations of the dimensional value across a length of the background region; adjusting, by the imaging-based profiler, the tilt value of the background region to a reduced tilt value; and determining, by the imaging-based profiler, the dimensional value based on the reduced tilt value.

In some aspects, the techniques described herein relate to a method, wherein the imaging-based profiler: determines whether the dimensional value of the portion of the profile deviates from the reference value by more than a threshold value, and adjusts the set of image data representing the profile based on a magnitude of the deviation from the reference value responsive to determining the dimensional value of the portion of the profile deviates from the reference value by more than the threshold value.

In some aspects, the techniques described herein relate to a device, including: an imaging assembly; one or more processors; and a non-transitory computer-readable memory coupled to the one or more processors, the memory storing instructions thereon that, when executed by the one or more processors, cause the one or more processors to: capture, by the imaging assembly, a set of image data representing a profile of at least one of an object and a background region, determine whether a dimensional value of a portion of the profile deviates from a reference value, the reference value being determined using one or more sets of image data captured using the imaging assembly, responsive to determining the dimensional value of the portion of the profile deviates from the reference value, adjust the set of image data representing the profile based on a magnitude of the deviation from the reference value, and output the adjusted set of image data, and optionally construct a three-dimensional (3D) model based on the adjusted set of image data.

In some aspects, the techniques described herein relate to a device, wherein the imaging assembly captures the set of image data at an initiation of an imaging session, the portion of the profile is a first portion, and wherein the instructions, when executed, further cause the one or more processors to: determine the reference value based on a second portion of the profile.

In some aspects, the techniques described herein relate to a device, wherein the imaging assembly captures the set of image data during an imaging session, the set of image data is a current set of image data, the one or more sets of image data is a plurality of sets of image data, and wherein the instructions, when executed, further cause the one or more processors to: determine the reference value based on an average value associated with background regions of the plurality of sets of image data, wherein the plurality of sets of image data does not include the current set of image data.

In some aspects, the techniques described herein relate to a device, wherein the imaging assembly captures the set of image data during an imaging session, and wherein the instructions, when executed, further cause the one or more processors to: determine, during the imaging session, whether a captured set of image data includes a respective background region; responsive to determining that the captured set of image data is a first set of image data to include a respective background region during the imaging session, determine the reference value based on the respective background region.

In some aspects, the techniques described herein relate to a device, wherein the imaging assembly captures the set of image data during a first imaging session, and the imaging assembly captured the one or more sets of image data during a second imaging session that is different from the first imaging session.

In some aspects, the techniques described herein relate to a device, wherein the dimensional value corresponds to a dimension, and determining whether the dimensional value of the portion of the profile deviates from the reference value further includes: determining the background region of the profile based on a dimensional range corresponding to the dimension, the dimensional range including pixels of the set of image data associated with the background region; and determining the dimensional value of the portion using image data from the set of image data that is included within the dimensional range.

In some aspects, the techniques described herein relate to a device, wherein the dimensional value corresponds to a first dimension, and the dimensional range corresponds to a second dimension that is different from the first dimension.

In some aspects, the techniques described herein relate to a device, wherein determining the dimensional value further includes: determining the dimensional value based on (i) an average value of the portion within the dimensional range or (ii) a single value of the portion within the dimensional range.

In some aspects, the techniques described herein relate to a device, wherein the instructions, when executed, further cause the one or more processors to: determine a tilt value of the background region based on variations of the dimensional value across a length of the background region; adjust the tilt value of the background region to a reduced tilt value; and determine the dimensional value based on the reduced tilt value.

In some aspects, the techniques described herein relate to a non-transitory computer-readable medium storing instructions thereon that, when executed by one or more processors, cause the one or more processors to: capture a set of image data representing a profile of at least one of an object and a background region; determine whether a dimensional value of a portion of the profile deviates from a reference value, the reference value being determined using one or more sets of image data; responsive to determining the dimensional value of the portion of the profile deviates from the reference value, adjust the set of image data representing the profile based on a magnitude of the deviation from the reference value; and output the adjusted set of image data; and optionally construct a three-dimensional (3D) model based on the adjusted set of image data.

### BRIEF DESCRIPTION OF THE DRAWINGS

The accompanying figures, where like reference numerals refer to identical or functionally similar elements throughout the separate views, together with the detailed description below, are incorporated in and form part of the specification, and serve to further illustrate embodiments of concepts that include the claimed invention, and explain various principles and advantages of those embodiments.
FIG. 1 is a diagram illustrating an example embodiment of a system of the present disclosure.
FIGS. 2A-B are diagrams illustrating an embodiment of an imaging-based profiler device of the present disclosure.
FIG. 3 is a diagram illustrating an example environment for implementing the device of FIGS. 2A-B.
FIG. 4 depicts a profile included as part of a set of image data captured by the device of FIGS. 2A-2B, and in accordance with various embodiments of the present disclosure.
FIG. 5 illustrates a first method for removing the effects of vibration in sets of image data captured by an imaging-based profiler, in accordance with various embodiments of the present disclosure.
FIG. 6 illustrates a second method for removing the effects of vibration in sets of image data captured by an imaging-based profiler, in accordance with various embodiments of the present disclosure.
FIG. 7 illustrates the dimension adjustments on captured sets of image data performed by the imaging-based profiler, in accordance with various embodiments of the present disclosure.
FIG. 8 illustrates the vibration effect reduction resulting from the methods applied by the imaging-based profiler, in accordance with various embodiments of the present disclosure.
FIG. 9 is a flowchart representative of a method for removing the effects of vibration in an imaging-based profiler, in accordance with embodiments described herein.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

The apparatus and method components have been represented where appropriate by conventional symbols in the drawings, showing only those specific details that are pertinent to understanding the embodiments of the present disclosure so as not to obscure the disclosure with details that will be readily apparent to those of ordinary skill in the art having the benefit of the description herein.

### DETAILED DESCRIPTION

As mentioned above, machine vision technologies may capture and process images to perform three-dimensional (3D) profiling of an object (e.g., 3D measurement and/or reconstruction of the object). According to such technologies, a 3D measurement and/or reconstruction device or system utilizes a (e.g., imaging-based) profiler with a light source to project one or more sheets of light (e.g., a laser beam, a structured light, or the like) onto an object and utilizes an imaging device (e.g., a camera, imager, or the like) to capture an image of the object illuminated by the light source. For example, the image may be a laser profile image generally comprising a bright line on a dark and nearly featureless background. The device (e.g., an imaging-based profiler or "imaging-based profiler device") or system detects and utilizes a position of the bright line in the captured image to determine 3D measurements of and/or reconstruct the object. Accuracy of the 3D measurements and/or reconstruction of the object is dependent, in part, on the stability of the object as it passes through the light sheets emitted by the profiler. For example, when the object is not subject to vibrations, a position of a center of a bright line in each column of a captured image can be reliably transformed into a 3D point in a world coordinate system. The 3D points lie on a plane defined by the sheet of light, thus creating a slice or profile of the object. Multiple profiles can be combined into a 3D point cloud of the object.

More specifically, the field of 3D imaging generally suffers from low-quality and inaccurate 3D measurements/reconstructions, particularly in environments where mechanical vibrations can compromise the accuracy of 3D scans. These vibrations, often caused by machinery such as conveyor belts, introduce inaccuracies into the 3D representation of scanned objects, which can significantly impact processes where high-speed, accurate 3D profiling is essential for quality control, process optimization, and/or other purposes.

Existing techniques to mitigate the effects of such vibration on 3D measurements or reconstructions frequently experience issues with their efficiency and overall effectiveness. For example, many existing techniques address the effects of vibrations downstream of the imaging device, such that these techniques are generally unable to provide real-time adjusted profiles and instead rely on resource intensive post-processing or editing on external computing devices. Further, many existing techniques encounter data loss stemming from the post-processing occurring after some processing or compression has already occurred on the raw sensor data.

The present techniques aim to solve these, and other, issues associated with such existing techniques via real-time processing of the raw image data by the imaging-based profiler. Namely, the present techniques involve capturing a set of image data representing the profile of an object and/or a background region and detecting and correcting deviations in dimensional values of the profile from the reference values beyond a predetermined threshold. The present techniques thus compensate for vertical vibrations that occur during the scanning process, to ensure that each captured profile is adjusted to maintain a consistent background height across the sequence of scans. This adjustment thereby achieves a high degree of measurement accuracy, as it effectively neutralizes the distortion caused by vibrations. This method of the present techniques to reduce/eliminate the effects of vibration on the 3D reconstruction/measurement process represents a significant improvement in the accuracy of 3D imaging technologies, as compared to existing techniques.

Moreover, the present techniques performing such corrective functions on the imaging-based profiler reduces/eliminates the effect of vibrations on the captured image data in real-time, and thereby avoids the issues experienced by many existing techniques that offload such adjustments to external computing devices. For example, as opposed to relying on time-and-resource-intensive post-processing that may only receive compressed and/or otherwise processed image data, the present techniques immediately adjust for any vibration effects to minimize the time and processing resources required, as well as minimize the potential for inaccurate reconstructions/models resulting from data loss through compression or additional processing. Thus, by adjusting the captured sets of image data on the imaging-based profiler device, the present techniques offer a significant improvement in measurement and modeling efficiency and accuracy, as compared to existing techniques.

The present techniques also improve upon existing techniques by enabling multiple methods for reducing/eliminating the effects of vibrations on the captured image data. Many existing techniques rely on a post-processing algorithm configured to reduce vibration effects in a single, static manner. However, the configuration of objects being imaged by a 3D profiler system is not always static (e.g., different objects on a conveyor belt, different configurations/positions of such objects), such that a static post-processing algorithm is not always suitable to remove the effects of vibrations on image data representing such variable configurations. Thus, these existing techniques frequently experience erroneous or inapplicable post-processing corrections resulting from non-optimally configured post-processing algorithms.

By contrast, the present techniques provide multiple methods for assessing and correcting for the effects of vibration on captured image data to account for such variable configurations that existing techniques fail to adequately handle. For example, the present techniques provide a first method that identifies and relies on a portion of the profile represented in the image data as being a static background region (e.g., representing a conveyor belt) that has a consistent positional (e.g., height) value through the course of an imaging session. This first method compares image data from a current profile within a dimensional range contained within the background region and the consistent positional value to determine whether the background region of the current profile deviates significantly from this value to subsequently determine how to adjust the profile into alignment with the other captured image data. However, if a consistent background region cannot be identified (e.g., due to different positions/configurations/types of objects on the conveyor belt), the present techniques provide a second method that determines a consistent positional value based on image data included within a dimensional range around the presumed background region dimensional value. This second method can thereby enable effective and accurate vibration reduction, regardless of the presence of a clear/identifiable background region within the profile of the captured image data. Therefore, at least based on these two methods, the present techniques enable more flexible and accurate vibration effect removal by incorporating multiple, distinct methods that account for various configurations of objects on a surface (e.g., conveyor belt) indicated in the captured image data.

In accordance with the above, and with the disclosure herein, the present disclosure includes improvements in computer functionality or improvements to other technologies at least because the present disclosure describes that, e.g., imaging-based profilers and/or systems, and their related various components, may be improved or enhanced with the disclosed system/device features and methods. That is, the present disclosure describes improvements in the functioning of an imaging device and/or image processing device and/or system and/or "any other technology or technical field" (e.g., the field of image processing). For example, the disclosed system/device features and methods improve and enhance the 3D measurement and/or reconstruction process of an object by introducing real-time and on-device processing of captured image data to reduce or eliminate the effects of vibrations on various object configurations without relying on post-processing performed by external computing devices or static processing algorithms.

In addition, the present disclosure applies various features and functionality, as described herein, with, or by use of, a particular machine, e.g., a processor, a device, and/or other hardware components as described herein. Moreover, the present disclosure includes specific features other than what is well-understood, routine, conventional activity in the field, or adding unconventional steps that demonstrate, in various embodiments, particular useful applications, e.g., determining, by the imaging-based profiler, whether a dimensional value of a portion of the profile deviates from a reference value by more than a threshold value, the reference value being determined using one or more sets of image data captured by the imaging-based profiler; responsive to determining the dimensional value of the portion of the profile deviates from the reference value by more than the threshold value, adjusting, by the imaging-based profiler, the set of image data representing the profile based on a magnitude of the deviation from the reference value; and/or outputting, by the imaging-based profiler, the adjusted set of image data, among others.

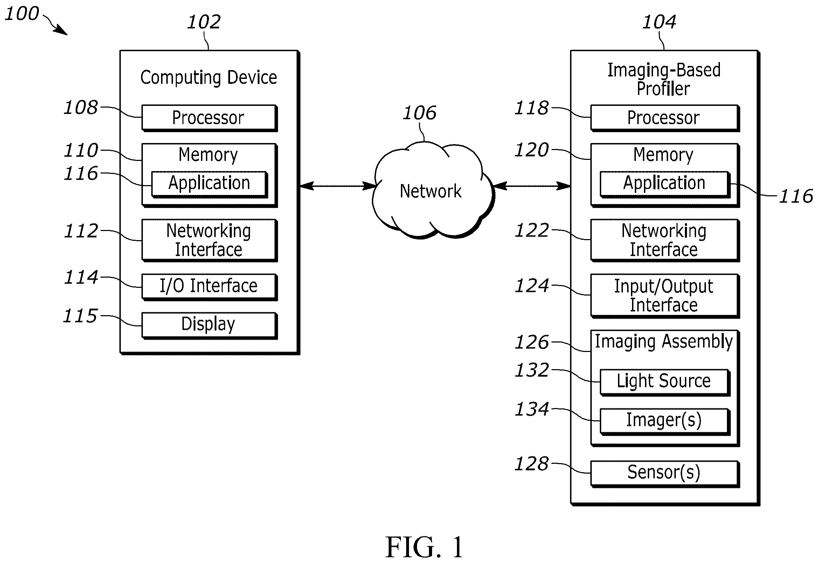

Turning to the Drawings, FIG. 1 is a diagram illustrating an example embodiment of an imaging system 100 of the present disclosure. In the example embodiment of FIG. 1, the imaging system 100 includes a computing device 102 and an imaging-based profiler 104 communicatively coupled to the computing device 102 via a network 106. Generally speaking, the computing device 102 and/or the imaging-based profiler 104 may be capable of executing instructions to, for example, implement operations of the example methods described herein, as may be represented by the flowcharts of the drawings that accompany this description. The computing device 102 is generally configured to enable a user/operator to create a machine vision job, such as a 3D measurement and/or reconstruction job, for execution on the imaging-based profiler 104. When created, the user/operator may then transmit/upload the machine vision job to the imaging-based profiler 104 via the network 106, where the machine vision job is then interpreted and executed. The computing device 102 may comprise one or more operator workstations, and may include one or more processors 108, one or more memories 110, a networking interface 112, an input/output (I/O) interface 114, a display 115, and an imaging application 116 (also referred to simply as the application 116).

The imaging-based profiler 104 is connected to the computing device 102 via the network 106, and is configured to interpret and execute machine vision jobs and/or various 3D measurement and/or reconstruction jobs, received from the computing device 102. The imaging-based profiler 104 may be a 3D profile sensor or a 3D profiler. For example, the imaging-based profiler 104 may be a Zebra^{®} Altiz 3D profile sensor. A machine vision job may comprise 3D profiling for generating a 3D representation (e.g., a point cloud) of an object. In 3D profiling, one or more imager(s) or image sensors view a line of light (e.g., laser light) projected onto an object where the light bends to follow a contour of the object to yield a profile that can be utilized to compute a depth or height along a width (e.g., thickness) of the line of light. Generally, the imaging-based profiler 104 may obtain a job file containing one or more job scripts from the computing device 102 via the network 106 that may define the machine vision job and may configure the imaging-based profiler 104 to capture and/or analyze images in accordance with the machine vision job. For example, the imaging-based profiler 104 may include flash memory used for determining, storing, or otherwise processing imaging data/datasets and/or post-imaging data.

The imaging-based profiler 104 may then receive, recognize, and/or otherwise interpret a trigger that causes the imaging-based profiler 104 to capture an image of an object in accordance with the configuration established via the one or more job scripts. Once captured and/or analyzed, the imaging-based profiler 104 may transmit the images and any associated data via the network 106 to the computing device 102 for further analysis and/or storage. Alternatively, or additionally, the imaging-based profiler 104 may further analyze or store captured and/or analyzed images and any associated data. For example, the imaging-based profiler 104 may apply one or more vibration reduction algorithms to the captured image data (e.g., prior to transmission to the computing device 102) to adjust the captured image data in a manner that removes or reduces the appearance of vibration effects on the captured image data. In various embodiments, the imaging-based profiler 104 may be a "smart" camera and/or may otherwise be configured to automatically perform sufficient functionality of the imaging-based profiler 104 in order to obtain, interpret, and execute job scripts that define machine vision jobs, such as any one or more job scripts contained in one or more job files as obtained, for example, from the computing device 102.

Broadly, the job file may be a JSON representation/data format of the one or more job scripts transferrable from the computing device 102 to the imaging-based profiler 104. The job file may further be loadable/readable by a C++ runtime engine, or other suitable runtime engine, executing on the imaging-based profiler 104. Moreover, the imaging-based profiler 104 may comprise a server (not shown) configured to listen for and receive job files across the network 106 from the computing device 102, such as, for example, a server running one or more GigE Vision^{®} protocols.

In any event, the imaging-based profiler 104 may include one or more processors 118, one or more memories 120 having the application 116 stored thereon, a networking interface 122, an I/O interface 124, an imaging assembly 126 having a light source 132 (e.g., a laser) and imager(s) 134, and sensor(s) 128.

The imaging assembly 126 may include one or more light sources 132 (e.g., one or more lasers) for projecting laser light onto an object and imager(s) 134 (e.g., a digital camera, image sensors, and/or digital video camera) for capturing or taking digital images and/or frames. Each digital image may comprise pixel data, vector information, or other image data that may be analyzed by one or more tools, each configured to perform an image analysis task (e.g., vibration reduction/elimination). In an embodiment, the imaging assembly 126 may have a dual-imager 134 (e.g., dual-camera) single light source 132 (e.g., laser) design where the dual-imagers 134 operate either synchronously or in alternation. In this way, imaging gaps generally encountered at surface junctures due to optical occlusions can be reduced and 3D data (e.g., profiles, depth maps, and/or point clouds) is generated by combining or selecting pixel data of the captured digital images and/or frames.

The digital camera, image sensors, and/or digital video camera of, e.g., the imaging assembly 126 may be configured, as disclosed herein, to take, capture, obtain, or otherwise generate digital images and, at least in some embodiments, may store such images in a memory (e.g., one or more memories 110, 120) of a respective device (e.g., the computing device 102 and/or the imaging-based profiler 104).

For example, the imaging assembly 126 may include a photo-realistic camera (not shown) for capturing, sensing, or scanning 2D image data. The photo-realistic camera may be an RGB (red, green, blue) based camera for capturing 2D images having RGB-based pixel data. In various embodiments, the imaging assembly may additionally include a 3D camera (not shown) for capturing, sensing, or scanning 3D image data. The 3D camera may include an Infra-Red (IR) projector and a related IR camera for capturing, sensing, or scanning 3D image data/datasets. A 3D camera of the imaging assembly 126 may include one or more of a time-of-flight camera, a stereo vision camera, a structured light camera, a range camera, a 3D profile sensor, or a triangulation 3D imager. According to embodiments of the present disclosure, the imaging assembly 126 may include a camera capable of capturing color information of a field of view (FOV) of the camera. In some embodiments, the photo-realistic camera of the imaging assembly 126 may capture 2D images, and related 2D image data, at the same or similar point in time as the 3D camera of the imaging assembly 126 such that the imaging-based profiler 104 can have both sets of 3D image data and 2D image data available for a particular surface, object, area, or scene at the same or similar instance in time. In various embodiments, the imaging assembly 126 may include the 3D camera and the photo-realistic camera as a single imaging apparatus configured to capture 3D depth image data simultaneously with 2D image data. As such, the captured 2D images and the corresponding 2D image data may be depth-aligned with the 3D images and 3D image data. In examples, a 3D image may include a point cloud or 3D point cloud. As such, as used herein, the terms 3D image and point cloud or 3D point cloud may be understood to be interchangeable.

In some embodiments, the imaging assembly 126 may be configured to capture images of surfaces or areas of a predefined search space or objects within the predefined search space. For example, each tool included in a job script may additionally include a region of interest (ROI) corresponding to a specific region or an object imaged by the imaging assembly 126. The ROI may be a predefined ROI, or the ROI may be determined through analysis of the image by the processor 118. Further, a plurality of ROIs may be predefined or determined through image processing. The composite area defined by the ROIs for all tools included in a particular job script may thereby define the predefined search space which the imaging assembly 126 may capture to facilitate the execution of the job script. However, the predefined search space may be user-specified to include a FOV featuring more or less than the composite area defined by the ROIs of all tools included in the particular job script. It should be noted that the imaging assembly 126 may capture 2D and/or 3D image data/datasets of a variety of areas, such that additional areas in addition to the predefined search spaces are contemplated herein. Moreover, in various embodiments, the imaging assembly 126 may be configured to capture other sets of image data in addition to the 2D/3D image data, such as grayscale image data or amplitude image data, each of which may be depth-aligned with the 2D/3D image data. Further, one or more ROIs may be within a FOV of the imaging system such that any region of the FOV of the imaging system may be a ROI.

As mentioned, the imaging-based profiler 104 may also process the 2D image data/datasets and/or 3D image datasets for use by other devices (e.g., the computing device 102, an external server). For example, the one or more processors 118 may process the image data or datasets captured, scanned, or sensed by the imaging assembly 126. The processing of the image data may generate post-imaging data that may include metadata, simplified data, normalized data, result data, status data, or alert data as determined from the original scanned or sensed image data. The image data and/or the post-imaging data may be transmitted to the computing device 102 executing the imaging application 116 for viewing, manipulation, and/or other interaction. In some embodiments, the image data and/or the post-imaging data may be transmitted to a server for storage or for further manipulation. As described herein, the computing device 102, imaging-based profiler 104, and/or external server or other centralized processing unit and/or storage may store such image data, and may also transmit the image data and/or the post-imaging data to another application implemented on a user (e.g., computing) device, such as a mobile device, a tablet, a handheld device, or a desktop device.

Each of the one or more memories 110, 120 may include one or more forms of volatile and/or non-volatile, fixed and/or removable memory, such as read-only memory (ROM), electronic programmable read-only memory (EPROM), random access memory (RAM), erasable electronic programmable read-only memory (EEPROM), and/or other hard drives, flash memory, MicroSD cards, and others. In general, a computer program or computer based product, application, or code (e.g., imaging application 116 or other computing instructions described herein) may be stored on a computer usable (e.g., readable) storage medium, or tangible, non-transitory computer-readable medium (e.g., standard random access memory (RAM), an optical disc, a universal serial bus (USB) drive, or the like) having such computer-readable program code or computer instructions embodied therein, wherein the computer-readable program code or computer instructions may be installed on or otherwise adapted to be executed by the one or more processors 108, 118 (e.g., working in connection with the respective operating system in the one or more memories 110, 120) to facilitate, implement, or perform the machine readable instructions, methods, processes, elements or limitations, as illustrated, depicted, or described for the various flowcharts, illustrations, diagrams, figures, and/or other disclosure herein.

The application 116, when executed by the one or more processors 108, 118, configures the one or more processors 108, 118 to perform various functions described below in greater detail and related to real-time and on-device (e.g., on the imaging-based profiler 104) processing of captured image data to reduce or eliminate the effects of vibrations on various object configurations without relying on post-processing performed by external computing devices or static processing algorithms to improve and enhance the efficiency and accuracy of a 3D measurement and/or reconstruction process of the object. For example, the application 116, when executed by the one or more processors 108, 118, configures the one or more processors 108, 118 to: determine, by the imaging-based profiler 104, whether a dimensional value of a portion of the profile deviates from a reference value, the reference value being determined using one or more sets of image data captured by the imaging-based profiler; responsive to determining the dimensional value of the portion of the profile deviates from the reference value, adjusting, by the imaging-based profiler 104, the set of image data representing the profile based on a magnitude of the deviation from the reference value; and/or output, by the imaging-based profiler 104, the adjusted set of image data.

In certain embodiments, the application 116, when executed by the one or more processors 108, 118 may cause the one or more processors 108, 118 to: transmit adjusted sets of image data to another device (e.g., from the imaging-based profiler 104 to the computing device 102) that is configured to construct 3D models based on the adjusted sets of image data, and/or constructing the 3D models based on the adjusted sets of image data. Thus, in these embodiments, the computing device 102 may be configured (e.g., via the application 116) to receive adjusted sets of image data output and transmitted by the imaging-based profiler 104 and construct 3D models based on the received adjusted sets of image data.

In this regard, the program code may be implemented in any desired program language, and may be implemented as machine code, assembly code, byte code, interpretable source code or the like (e.g., via Golang, Python, C, C++, C#, Objective-C, Java, Scala, ActionScript, JavaScript, HTML, CSS, XML, etc.). The application 116 may also be implemented as a suite of distinct applications in other examples. Those skilled in the art will appreciate that the functionality implemented by the one or more processors 108, 118 via the execution of the application 116 may also be implemented by one or more specially designed hardware and firmware components, such as field-programmable gate arrays (FPGAs), application-specific integrated circuits (ASICs) and the like in other embodiments.

The one or more memories 110, 120 may store an operating system (OS) (e.g., Microsoft Windows, Linux, Unix, etc.) capable of facilitating the functionalities, apps, methods, or other software as discussed herein. The one or more memories 110 may also store the application 116, which may be configured to enable machine vision job construction, as described further herein. Additionally, or alternatively, the imaging application 116 may also be stored in the one or more memories 120 of the imaging-based profiler 104, and/or in an external database (not shown), which is accessible or otherwise communicatively coupled to the computing device 102 via the network 106. The one or more memories 110, 120 may also store machine readable instructions, including any of one or more application(s), one or more software component(s), and/or one or more application programming interfaces (APIs), which may be implemented to facilitate or perform the features, functions, or other disclosure described herein, such as any methods, processes, elements or limitations, as illustrated, depicted, or described for the various flowcharts, illustrations, diagrams, figures, and/or other disclosure herein. For example, at least some of the applications, software components, or APIs may be, include, otherwise be part of, a machine vision-based imaging application, such as the imaging application 116, where each may be configured to facilitate their various functionalities discussed herein. It should be appreciated that one or more other applications may be envisioned and that are executed by the one or more processors.

The one or more processors 108, 118 may be connected to the one or more memories 110, 120 via a computer bus responsible for transmitting electronic data, data packets, or other electronic signals to and from the one or more processors 108, 118 and one or more memories 110, 120 to implement or perform the machine readable instructions, methods, processes, elements or limitations, as illustrated, depicted, or described for the various flowcharts, illustrations, diagrams, figures, and/or other disclosure herein.

The one or more processors 108, 118 may interface with the one or more memories 110, 120 via the computer bus to execute the operating system (OS). The one or more processors 108, 118 may also interface with the one or more memories 110, 120 via the computer bus to create, read, update, delete, or otherwise access or interact with the data stored in the one or more memories 110, 120 and/or external databases (e.g., a relational database, such as Oracle, DB2, MySQL, or a NoSQL based database, such as MongoDB). The data stored in the one or more memories 110, 120 and/or an external database may include all or part of any of the data or information described herein, including, for example, machine vision job images (e.g., images captured by the imaging-based profiler 104 in response to execution of a job script) and/or other suitable information.

The networking interfaces 112, 122 may be configured to communicate (e.g., transmit and receive) data via one or more external/network port(s) to one or more networks or local terminals, such as network 106, described herein. In some embodiments, networking interfaces 112, 122 may include a client-server platform technology such as ASP.NET, Java J2EE, Ruby on Rails, Node.js, a web service or online API, responsive for receiving and responding to electronic requests. The networking interfaces 112, 122 may implement the client-server platform technology that may interact, via the computer bus, with the one or more memories 110, 120 (including the applications(s), component(s), API(s), data, etc. stored therein) to implement or perform the machine readable instructions, methods, processes, elements or limitations, as illustrated, depicted, or described for the various flowcharts, illustrations, diagrams, figures, and/or other disclosure herein.

According to some embodiments, the networking interfaces 112, 122 may include, or interact with, one or more transceivers (e.g., WWAN, WLAN, and/or WPAN transceivers) functioning in accordance with IEEE standards, 3GPP standards, or other standards, and that may be used in receipt and transmission of data via external/network ports connected to network 106. In some embodiments, network 106 may comprise a private network or local area network (LAN) utilizing Gigabit Ethernet. Additionally or alternatively, network 106 may comprise a public network such as the Internet. In some embodiments, the network 106 may comprise routers, wireless switches, or other such wireless connection points communicating to the computing device 102 (via the networking interface 112) and the imaging-based profiler 104 (via networking interface 122) via wireless communications based on any one or more of various wireless standards, including by non-limiting example, IEEE 802.11a/b/c/g (WIFI), the BLUETOOTH^{®} standard, or the like.

The I/O interfaces 114, 124 may include or implement operator interfaces configured to present information to an administrator or operator and/or receive inputs from the administrator or operator. An operator interface may provide a display screen (e.g., via the user computing device 102 and/or imaging-based profiler 104) which a user/operator may use to visualize any images, graphics, text, data, features, pixels, objects, surfaces, and/or other suitable visualizations or information. For example, the computing device 102 and/or imaging-based profiler 104 may comprise, implement, have access to, render, or otherwise expose, at least in part, a graphical user interface (GUI) for displaying images, graphics, text, data, features, pixels, and/or other suitable visualizations or information on the display screen. In an embodiment, the computing device 102 and/or imaging-based profiler 104 may utilize the Zebra Aurora Imaging Library^{™} and/or the Zebra Aurora Design Assistant^{™}. In another embodiment, the computing device 102 and/or imaging-based profiler 104 may utilize vision software that implements support for the GigE Vision standard, GenlCam GenDC specification, GenlCam PFNC 3D pixel formats, and other interface standards and/or protocols.

The I/O interfaces 114, 124 may also include I/O components (e.g., connectors, ports, capacitive or resistive touch sensitive input panels, keys, buttons, lights, LEDs indicating one or more of a status of power, light source, or network speed, any number of keyboards, mice, USB drives, optical drives, screens, touchscreens, etc.), which may be directly/indirectly accessible via or attached to the computing device 102 and/or the imaging-based profiler 104. In an embodiment, the imaging-based profiler 104 may utilize connectors including, but not limited to, M12-X 8-pin connectors for network interface and power input or M12-A 12 pin connectors for digital I/Os and alternate power input. In an embodiment, the imaging-based profiler 104 may utilize digital I/Os including, but not limited to, 24 volt (V) isolated inputs or 24 V isolated outputs (e.g., having a 5 KHz maximum). According to some embodiments, an administrator or user/operator may access the computing device 102 and/or imaging-based profiler 104 to construct jobs, review images or other information, make changes, input responses and/or selections, and/or perform other functions.

The sensor(s) 128 can include any one of, or any suitable combination of, sensors. For example, the sensor(s) 128 can comprise an inertial navigation system including one or more of an accelerometer, a gyroscope, a magnetometer, an altimeter, or a proximity sensor. In this way, the sensor(s) 128 in conjunction with one or more other components (e.g., the imaging assembly 126) of the imaging-based profiler 104 provide for determining a position and orientation of the imaging-based profiler 104. Additionally, a proximity sensor (e.g., an object detection sensor, trigger, or mechanism) provides for automatically and efficiently commencing and ceasing imaging (e.g., a single profile scan, a fixed-length scan (frame start), or a variable-length scan (frame active)) of an object. In some embodiments, the proximity sensor can be one or more of, or any suitable combination of, a quadrature encoder with A/B channels, an external input trigger, an internal object detection trigger, internal timers, counters, and/or logic blocks, or an external software trigger.

As described above herein, in some embodiments, the computing device 102 may perform the functionalities as discussed herein as part of a "cloud" network or may otherwise communicate with other hardware or software components within the cloud to send, retrieve, or otherwise analyze data or information described herein. For example, the computing device 102 may be implemented as one or more cloud-based servers that may comprise one or more cloud-based computing platform(s), such as MICROSOFT AZURE, AMAZON AWS, or the like.

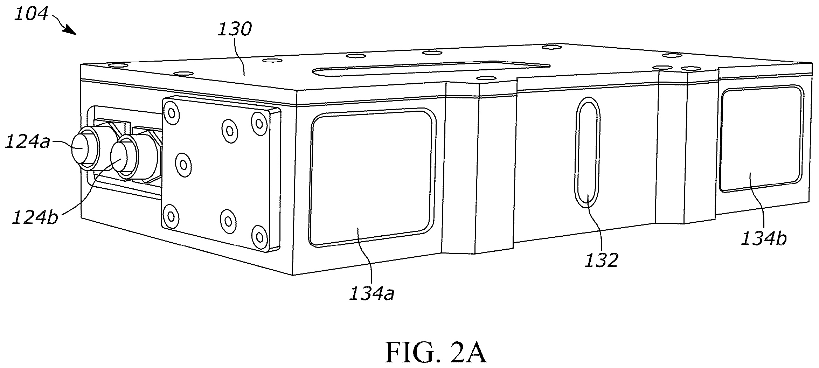

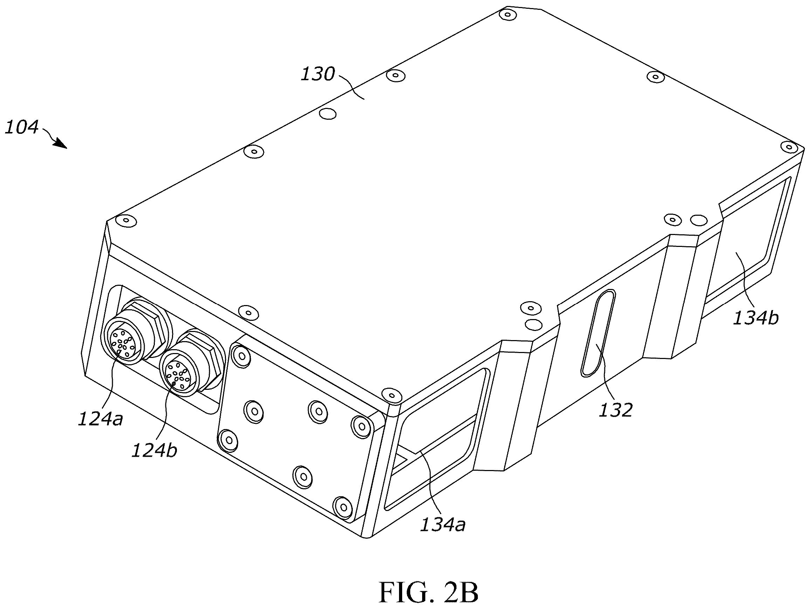

FIGS. 2A-B are diagrams illustrating an embodiment of an imaging-based profiler device 104 of the present disclosure. More specifically, FIGS. 2A and 2B are perspective views of an example imaging-based profiler device 104 that may be implemented in the imaging system of FIG. 1, in accordance with embodiments described herein. The imaging-based profiler 104 includes a housing 130, I/O ports 124a and 124b, a light source 132 (e.g., a laser) and imagers 134a and 134b. The housing may be a solid IP67-rated aluminum housing for harsh environments. The light source 132 and imagers 134a and 134b provide for imaging scenes with profiling rates that allow for reducing imaging gaps generally encountered at surface junctures due to optical occlusions.

As previously mentioned, the imaging-based profiler 104 may obtain job files from a computing device (e.g., user computing device 102) which the imaging-based profiler 104 thereafter interprets and executes. The instructions included in the job file may include device configuration settings (also referenced herein as "imaging settings") operable to adjust the configuration of the imaging-based profiler 104 prior to capturing images of an object. For example, the device configuration settings may include instructions to adjust one or more settings (e.g., an exposure time) related to the imagers 134a and 134b, and the imaging-based profiler 104 may interpret these instructions (e.g., via one or more processors 118) and accordingly adjust the one or more settings of the imagers 134a and 134b. Thus, the imaging-based profiler 104 may be configured to automatically adjust its own configuration to optimally conform to a particular machine vision job.

The imaging-based profiler 104 may include one or more attachment point(s) or mounting point(s) (not shown) to enable a user to connect and/or removably affix the imaging-based profiler 104 to a mounting device (e.g., imaging tripod, camera mount, etc.), a structural surface (e.g., a warehouse wall, a warehouse ceiling, scanning bed or table, structural support beam, etc.), other accessory items (e.g., a robotic arm), and/or any other suitable connecting devices, structures, or surfaces. For example, the imaging-based profiler 104 may be optimally placed on a mounting device in a distribution center, manufacturing plant, warehouse, and/or other facility to image and thereby monitor the quality/consistency of products, packages, and/or other items as they pass through a field of view (FOV) of the imaging-based profiler 104. Moreover, the mounting point(s) may enable a user to connect the imaging-based profiler 104 to a myriad of accessory items including, but without limitation, one or more external illumination devices, one or more mounting devices/brackets, and the like. In an embodiment, the one or more attachment point(s) or mounting point(s) may accept M4-threaded screws and the imaging-based profiler 104 may include through hole guides to allow for seamless installation and alignment of additional imaging-based profilers.

In addition, the imaging-based profiler 104 may include several hardware components contained within the housing 130 that enable connectivity to a computer network (e.g., network 106). For example, the imaging-based profiler 104 may include a networking interface (e.g., networking interface 122) that enables the imaging-based profiler 104 to connect to a network, such as a Gigabit Ethernet connection and/or a Dual Gigabit Ethernet connection. Further, the imaging-based profiler 104 may include transceivers and/or other communication components as part of the networking interface to communicate with other devices (e.g., the user computing device 102) via, for example, Power-over Ethernet (PoE), Ethernet/IP, PROFINET, Modbus TCP, CC-Link, USB 3.0, RS-232, and/or any other suitable communication protocol or combinations thereof.

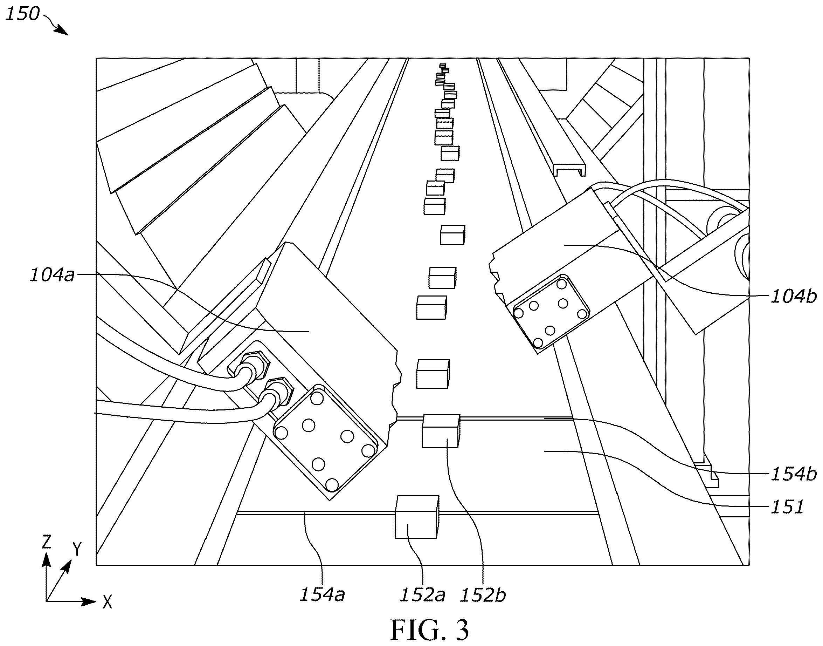

FIG. 3 is a diagram illustrating an example environment 150 for implementing the imaging-based profiler 104 of FIGS. 2A and 2B. In the environment 150 of FIG. 3, imaging-based profilers 104a and 104b (also collectively referred to as the imaging-based profilers 104) are positioned above a scanning surface 151. The imaging-based profilers 104a and 104b are disposed and oriented such that FOVs (not shown) of the imaging-based profilers 104a and 104b include at least a portion of the scanning surface 151. The scanning surface 151 may be a table, podium, mount for mounting an object or part, a conveyer, a cubby hole, or another mount or surface that may support a part or object to be scanned. As illustrated, the scanning surface 151 is a conveyer belt having a plurality of objects 152 (e.g., objects 152a and 152b) thereon where the object 152a is within a FOV of the imaging-based profiler 104a and the object 152b is within the FOV of the imaging-based profiler 104b. As the object 152a passes within the FOV of the imaging-based profiler 104a, the imaging-based profiler 104a projects a laser light 154a onto the object 152a while the imager(s) 134 (as shown in FIGS. 2A and 2B) of the imaging-based profiler 104a capture one or more images of the object 152a. Additionally, as the object 152a passes within the FOV of the imaging-based profiler 104b, the imaging-based profiler 104b can project laser light 154b onto the object 152a while the imagers(s) 134 (as shown in FIGS. 2A and 2B) of the imaging-based profiler 104b capture one or more additional images of the object 152a. The additional images of the object 152a captured by the imaging-based profiler 104b can be combined with the images of the object 152a captured by the imaging-based profiler 104a to provide an enhanced profile of the object 152a. For example, the images can be stitched together (e.g., combined) to provide a greater field of view of the object and/or to capture data points on the surface of the object 152a that may otherwise be occluded from view (e.g., from imaging-based profiler 104a). Those of ordinary skill in the art will understand that one or more of the foregoing processes for capturing images of the object 152a can be performed in connection with each of the plurality of objects 152 (e.g., object 152b) to capture one or more images thereof by the imaging-based profiler 104a and/or the imaging-based profiler 104b without departing from the spirit or scope of the present disclosure.

As mentioned above, the imaging-based profilers 104 may each be 3D profile sensor or a 3D profiler. For example, the imaging-based profilers 104 may be a Zebra^{®} Altiz 3D profile sensor. The imaging-based profilers 104 may execute a machine vision job including, but not limited to, 3D profiling for generating a 3D representation (e.g., a point cloud) of an object. In 3D profiling, one or more imager(s) or image sensors view a line of light (e.g., laser light) projected onto an object where the light bends to follow a contour of the object to yield a profile that can be utilized to compute a depth or height along a width (e.g., thickness) of the line of light. The imaging-based profilers 104a and 104b may respectively determine one or more profiles of the objects 152a and 152b and combine the respective one or more profiles to generate a point cloud of the objects 152a and 152b. Additionally, in some embodiments, the imaging-based profilers 104a and 104b, and associated system, may identify, from 3D information from a 3D image or point cloud of an object 152 (e.g., object 152a), a surface of the respective object 152. The imaging-based profilers 104a and 104b, and associated processors and system, may then match the identified surface of the object 152 with a predefined and/or identified model surface to perform surface matching and thereby identify the object 152. Those of ordinary skill in the art will understand that one or more of the foregoing processes for identifying an object 152 based on matching a surface derived from its 3D image or point cloud to a predefined and/or identified model surface can be performed in connection with each of the plurality of objects 152 without departing from the spirit or scope of the present disclosure.

The imaging-based profilers 104a and 104b may be mounted above the objects 152 on a ceiling, a beam, a metal tripod, or another object for supporting the position of the imaging-based profilers 104a and 104b for capturing images of the objects 152 on the scanning surface 151. Further, the imaging-based profilers 104a and 104b may alternatively be mounted on a wall or another mount that faces objects 152 on the scanning surface 151 from a horizontal direction. In examples, the imaging-based profiler 104 may be mounted on any apparatus or surface for imaging and scanning objects 152 that are in, or pass through, the FOV of the imaging-based profiler 104.

As mentioned above, the embodiments of the present disclosure provide for more robust machine vision applications including, but not limited to, 3D measurement and/or reconstruction of an object in real-time. By performing real-time and on-device (e.g., on the imaging-based profiler 104) processing of captured image data to reduce or eliminate the effects of vibrations on various object configurations without relying on post-processing performed by external computing devices or static processing algorithms, the described systems and methods improve and enhance the efficiency and accuracy of the 3D measurement and/or reconstruction process of an object 152. The disclosed embodiments may further provide benefits as to reduce human analysis and input during automated processes, increase surface matching efficiency, increase object identification efficiency and accuracy, and increase the versatility, machine vision process efficiency, and robustness of a machine vision system.

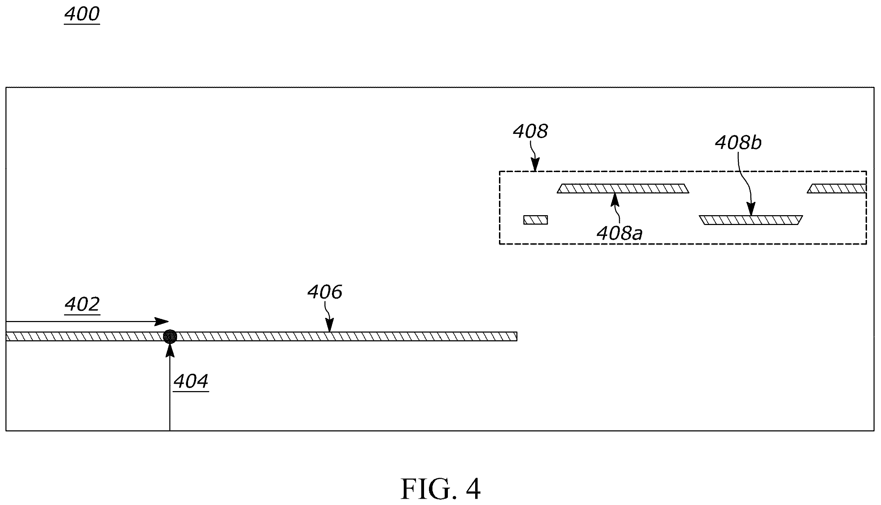

FIG. 4 depicts a profile 400 included as part of a set of image data captured by the imaging-based profiler device of FIGS. 2A-2B, and in accordance with various embodiments of the present disclosure. The profile 400 generally indicates the 2D shape and dimension of the objects (e.g., conveyor belt and objects placed thereon) present in the imaging-based profiler's field of view. Such 2D shape and dimension may be in the two dimensions illustrated in FIG. 4, as depicted by the first arrow 402 and the second arrow 404. For example, the first arrow 402 may represent the x-dimension (e.g., lateral displacement across the surface of the conveyor belt), and the second arrow may represent the z-direction (e.g., height of the conveyor belt or objects located thereon). Of course, it should be appreciated that the two dimensions may be representative of any suitable dimensions, such as the *y*-direction.

When combined with a plurality of such profiles, the imaging-based profiler device may output a full 3D reconstruction/model of the corresponding conveyor belt portions, along with the objects placed thereon. Namely, the background region 406 corresponds to the conveyor belt and the object region 408 generally corresponds to an object (or set of objects) that are located on the conveyor belt. The object region 408 includes several distinct sub-regions (e.g., 408a, 408b) that may have different dimensional values corresponding to the structural form or 3D shape of the object. For example, the dimensional value difference between sub-regions 408a and 408b, as illustrated in FIG. 4, may reflect the 3D structural configuration of the object represented by the object region 408, which may vary or change along the *y-*direction as the imaging-based profiler captures subsequent sets of image data including subsequent profiles of the object.

Generally, the dimensional values of these regions 406, 408 can significantly differ, with object regions 408 potentially varying in height or width compared to the relatively static dimensions of the background regions 406. For instance, the object region 408 may exhibit a different z-dimension (height) compared to the background region 406 due to its physical presence above the background. The background region 406 may typically exhibit a relatively static height (e.g., in the z-dimension represented by the second arrow 404) across subsequent image data set captures. This consistency allows the imaging-based profiler to determine, and potentially thereafter presume, a static height for the background regions 406, thus simplifying the process of establishing a baseline or reference value for comparison.

The imaging-based profiler may determine such a reference value corresponding to the background region 406 in the z-dimension (and/or other dimensions, such as the dimension represented by the first arrow 402) to serve as a baseline for comparison of subsequently captured sets of image data that may be captured during an imaging session (e.g., associated with a particular object or production run of similar objects). The imaging-based profiler may determine this reference value based on initial image data set captures at the initiation (beginning) of an imaging session or averaged from background regions 406 across multiple sets of image data captured in the same or different sessions. For example, the imaging-based profiler may determine the reference value corresponding to the background region 406 by utilizing the z-dimensional value of the background region 406 in the first set of image data captured as part of an imaging session. Additionally, or alternatively, the imaging-based profiler may determine the reference value by taking the average of the dimensional value of the background regions across multiple (e.g., two or more) sets of image data including profiles. Further, the reference value may be in terms of pixel locations on the sensor(s) of the imaging-based profiler (e.g., pixel reference values may be (--, 30), where these values correspond to (x-dimension, z-dimension)) or converted into a z-dimensional height value (e.g., 30 mm).

The imaging-based profiler may also store such reference value in the profiler's memory for subsequent analysis during the imaging session or during multiple imaging sessions. The imaging-based profiler may use this reference value in subsequent analyses to determine whether any particular background region of a profile (e.g., profile 400) deviates from this reference value by more than a threshold value. The imaging-based profiler may also determine the threshold value in terms of pixel values or z-dimensional values (e.g., in mm) and may make such a determination based on an average range of dimensional values across multiple image frames of profiles, a dimension of the background region 406 within one or more profiles, and/or using any other suitable method. For example, the imaging-based profiler may determine that the first five profiles of an imaging session have background dimensional values of 20 mm, 21 mm, 22 mm, 19 mm, and 18 mm, such that the average background dimensional value is 20 mm with a range (e.g., deviation in the z-dimension) of approximately 2 mm. Thus, the imaging-based profiler may store the average background dimensional value (20 mm) as the reference value and the dimensional range (2 mm) as the threshold value for subsequent analyses during the imaging session.

By comparing the dimensional value of a portion of the profile (e.g., the background region 406) against the stored reference value for the background, the imaging-based profiler can identify deviations exceeding the threshold value. In particular, responsive to determining that the dimensional value of a portion of the profile (e.g., background region 406) deviates from the reference value by more than the threshold value, the imaging-based profiler adjusts the set of image data representing the profile (e.g., background region 406 and object region 408). This adjustment may be based on the magnitude of the deviation, ensuring that the output image data reflects corrected dimensional values. Such on-device analysis and correction thereby ensures that subsequent analysis or processing of the image data, whether for quality control, measurement, or other purposes, is based on accurate and corrected profiles.

For example, if a profile includes a respective background region (e.g., 406) having a z-dimensional value of 25 mm, the reference value for background regions during the current imaging session is 30 mm, and the threshold value is 3 mm, the imaging-based profiler may determine that the dimensional value of the respective background region deviates from the reference value by more than the threshold value and the profile should be adjusted accordingly. The imaging-based profiler may then adjust the entire profile (e.g., including the background region 406 and the object region 408) by the magnitude of the deviation, such that in this example, the imaging-based profiler may adjust the regions 406, 408 by 5 mm in the positive z-dimension to more closely align the regions 406, 408 with those corresponding to the reference value, and thereby remove the effects of vibrations from the set of image data including the profile 400. In certain embodiments, the imaging-based profiler may determine and/or otherwise set the threshold value to be zero, such that the imaging-based profiler may adjust profiles having a z-dimensional value that deviates from the reference value by any amount.

In certain embodiments, the imaging-based profiler may adjust/change the image data point values associated with the profile 400 in a direction and magnitude that is based on the direction and magnitude of the deviation of the profile's background region 406 dimensional value from the reference value (e.g., without first determining whether the deviation meets, exceeds, and/or otherwise satisfies the threshold value). Accordingly, the imaging-based profiler can adjust/change the profile 400, such that the profile 400 is aligned with the reference value, regardless of the magnitude of the deviation therefrom. In some embodiments, the techniques of the present disclosure may also adjust the sets of image data to account for other deviations from the reference value. For example, the techniques described herein may be used to determine (e.g., by the imaging-based profiler 104) a tilt value of a background region based on variations of the dimensional value across a length of the background region. The imaging-based profiler may then adjust the tilt value of the background region to a reduced tilt value, such as by adjusting portions of the profile by different amounts in the z-direction (e.g., up or down), and determine the dimensional value based on the reduced tilt value. To illustrate, suppose the background region 406 is tilted in the z-dimension (e.g., rotated around the *y*-axis), such that a first subset of the image data comprising the background region 406 is lower (e.g., in the negative z-direction) than it should be, and a second subset of the image data comprising the background region 406 is higher (e.g., in the positive z-direction) than it should be. The imaging-based profiler may adjust the image data corresponding to the first subset by increasing the z-dimension dimensional value and may adjust the image data corresponding to the second subset by decreasing the z-dimension dimensional value to bring both subsets of image data into alignment in the z-dimension, and thereby reducing/eliminating the tilt of the background region. Of course, these tilt adjustments may be applied to the object regions and/or any other regions of a profile, as necessary. According to another example, the imaging-based profiler can determine a slope (e.g., angle deviating from the horizontal axis of FIG. 4) corresponding to the image data comprising the background region 406, and can then adjust the image data representing the profile (e.g., background region 406 and object region 408) such that the slope, or tilt, of the image data comprising the background region 406 does not deviate from the horizontal axis. Those of ordinary skill in the art will understand that the tilt of the image data can be similarly adjusted for both the initial image data set as well as subsequent data sets, such that all image data profiles captured by the imaging-based profiler are adjusted for tilt. Those of ordinary skill in the art will also understand that the tilt of the image data profiles can adjusted in addition to adjusting the z-dimensional values of the image data profiles, as described hereinabove.

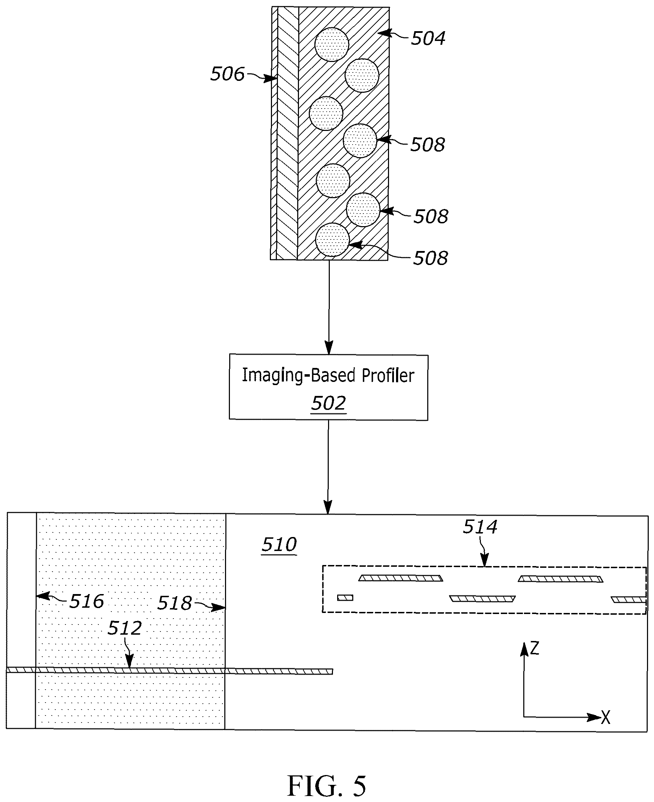

FIG. 5 illustrates a first method 500 for removing the effects of vibration in sets of image data captured by an imaging-based profiler, in accordance with various embodiments of the present disclosure. The first method 500 generally includes capturing sets of image data that include a profile having a background region and one or more object regions, identifying those portions within the profile, determining whether one or both of those portions has a dimensional value that meets, exceeds, or otherwise fails to satisfy a threshold value relative to a reference value, and if necessary, adjusting the image data point values associated with the profile based on the magnitude of the deviation of such dimensional value from the reference value. According to some embodiments of the present disclosure, the first method 500 may include adjusting/changing the image data point values associated with each captured profile in a direction and magnitude that is based on the direction and magnitude of the deviation of the captured profile's background region dimensional value from the reference value (e.g., without first determining whether the deviation meets, exceeds, and/or otherwise satisfies the threshold value). Accordingly, the first method 500 can include adjusting/changing each captured profile, such that every captured profile is aligned with the reference value, regardless of the magnitude of the deviation therefrom. The description of the first method 500 herein may reference capturing image data of a conveyor belt, but it should be appreciated that this is for purposes of discussion only, and that the sets of image data may include image data representing any suitable surface (e.g., tabletops, shelves, etc.) where objects may be placed.

The first method 500 may include an imaging-based profiler 502 capturing a set of image data of a conveyor belt 504 having a background 506 and one or more objects 508 placed thereon. The background 506 may correspond to a region of the conveyor belt 504 where no objects 508 are positioned, such that the conveyor belt remains clear of objects throughout an imaging session. In such scenarios, the profiles (e.g., profile 510) resulting from the sets of image data captured by the imaging-based profiler 502 may consistently have a background region/portion (e.g., region 512) that is known to be representative of the conveyor belt surface. This conveyor belt surface may be presumed to remain at a constant height through an imaging session, such that significant deviations in the determined height of the background region 512 may indicate vibration effects introducing error into the 3D profiling. Thus, the imaging-based profiler 502 may leverage this consistent representation of the conveyor belt surface in the sets of image data to determine whether the profile data has shifted due to the effects of vibration (or other causes).

The example profile 510 represents at least a portion of an example set of image data captured by the imaging-based profiler 502 during an imaging session associated with the conveyor belt 504. The example profile 510 has a background region 512 and an object region 514 and may also generally indicate the analysis performed as part of the first method 500. For example, the example profile 510 includes a first dimensional boundary 516 and a second dimensional boundary 518 that collectively define a dimensional range in a first dimension (e.g., the x-dimension). This first dimension is different from the dimension of interest (e.g., the z-dimension) when determining whether the image data corresponding to the profile 510 should be adjusted. In any event, the imaging-based profiler 502 may analyze image data of the background region 512 that is within this dimensional range extending from the first dimensional boundary 516 to the second dimensional boundary 518 to determine a dimensional value (e.g., z-dimension, height) of the background region 512. The imaging-based profiler 502 may determine this dimensional value in any suitable manner, such as by identifying a single data point within this dimensional range and/or averaging the dimensional values of multiple data points that fall within the dimensional range.

With the dimensional value (z-dimension) of the background region 512, the imaging-based profiler 502 may then compare this dimensional value to a reference value to determine whether the dimensional value meets, exceeds, and/or otherwise fails to satisfy a threshold value corresponding to the reference value. For example, if the imaging-based profiler 502 determines that the dimensional value meets, exceeds, and/or otherwise fails to satisfy the threshold value, then the imaging-based profiler 502 may adjust/change the image data point values associated with the entire profile 510 in a direction and magnitude that is based on the direction and magnitude of the deviation of the background region's 512 dimensional value from the reference value. Similarly, if the imaging-based profiler 502 determines that the dimensional value does not meet, exceed, and/or otherwise satisfy the threshold value, then the imaging-based profiler 502 may not adjust/change the image data point values associated with the entire profile 510. Alternatively, according to some embodiments of the present disclosure, the imaging-based profiler 502 may adjust/change the image data point values associated with each of the profiles 510 in a direction and magnitude that is based on the direction and magnitude of the deviation of each respective profile's background region 512 dimensional value from the reference value (e.g., without first determining whether the deviation meets, exceeds, and/or otherwise satisfies the threshold value). Accordingly, the imaging-based profiler 502 can adjust/change each of the profiles 510, such that every profile 510 is aligned with the reference value, regardless of the magnitude of the deviation therefrom. The imaging-based profiler 502 may output the set of image data represented by each of the profiles 510 (e.g., to external computing devices) after the adjustment/change is completed, such that each set of image data (and by proxy, each profile) output by the imaging-based profiler 502 is relatively aligned, thereby providing for the creation of vibration effect-free 3D models/reconstructions of the objects represented by the sets of image data (e.g., in the object region 514).

For example, if the background region 512 has a z-dimensional value of 10 mm, the reference value for background regions during the current imaging session is 7 mm, and the threshold value is 2 mm, the imaging-based profiler 502 may determine that the dimensional value of the background region 512 deviates from the reference value by more than the threshold value and the profile 510 should be adjusted accordingly. The imaging-based profiler 502 may then adjust the entire profile 510 (e.g., including the background region 512 and the object region 514) by the magnitude and in the opposite direction of the deviation. Thus, in this example, the imaging-based profiler 502 may adjust the background region 512 and the object region 514 by 3 mm in the negative z-direction (e.g., down) to more closely align the background region 512 and the object region 514 with the prior sets of image data, and thereby remove the effects of vibrations from the set of image data including the profile 510. Alternatively in this example, the threshold value may be 0 mm, such that the imaging-based profiler 502 may adjust the profile 510 when the profiler 502 determines that the background region 512 has a z-dimensional value that deviates from the reference value by any amount (e.g., having any non-zero magnitude).

As another example, the imaging-based profiler 502 may adjust/change the image data point values associated with the profile 510 in a direction and magnitude that is based on the direction and magnitude of the deviation of the background region 512 dimensional value from the reference value (e.g., without first determining whether the deviation meets, exceeds, and/or otherwise satisfies the threshold value). Accordingly, the imaging-based profiler 502 can adjust/change the profile 510, such that the profile 510 is aligned with the reference value, regardless of the magnitude of the deviation therefrom.

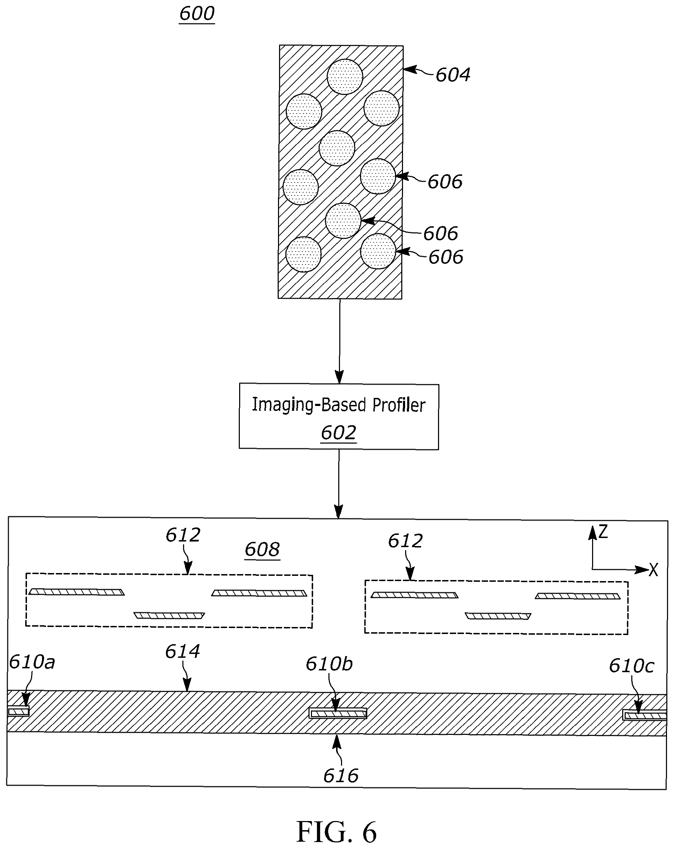

FIG. 6 illustrates a second method 600 for removing the effects of vibration in sets of image data captured by an imaging-based profiler, in accordance with various embodiments of the present disclosure. The second method 600 generally includes capturing sets of image data that include a profile having one or more object regions and that do not include a clearly defined background region. The second method 600 further includes determining the background region of the profile based on a dimensional range corresponding to the dimension of interest (e.g., z-dimension) where the dimensional range includes pixels of the set of image data associated with the background region. The second method 600 further includes determining the dimensional value (e.g., height) of the background region using image data from the set of image data that is included within the dimensional range, determining whether the background region has a dimensional value that meets or exceeds a threshold value relative to a reference value, and if necessary, adjusting the image data associated with the profile based on the magnitude of the deviation of such dimensional value from the reference value. The description of the second method 600 herein may reference capturing image data of a conveyor belt, but it should be appreciated that this is for purposes of discussion only, and that the sets of image data may include image data representing any suitable surface (e.g., tabletops, shelves, etc.) where objects may be placed.

The second method 600 may include an imaging-based profiler 602 capturing a set of image data of a conveyor belt 604 with one or more objects 606 placed thereon. The conveyor belt 604 surface may serve as the background region, but may not remain clear of objects throughout an imaging session. In such scenarios, the profiles (e.g., profile 608) resulting from the sets of image data captured by the imaging-based profiler 602 may have a variable background region/portion that is representative of the conveyor belt 604 surface. However, similar to the first method 500, this conveyor belt 604 surface may be presumed to remain at a constant height through an imaging session, such that significant deviations in the determined height of the variable background region in any set of imaging data may indicate vibration effects introducing error into the 3D profiling. Thus, the imaging-based profiler 602 may initially determine where the background region of any set of image data is prior to determining whether the profile data has shifted due to the effects of vibration (or other causes).

The example profile 608 represents at least a portion of an example set of image data captured by the imaging-based profiler 602 during an imaging session associated with the conveyor belt 604. The example profile 608 has a background region collectively made up of background regions 610a, 610b, and 610c, object regions 612, and may also generally indicate the analysis performed as part of the second method 600. The object regions 612 may, e.g., represent two distinct objects positioned on the conveyor belt 604. For example, the example profile 608 includes a first dimensional boundary 614 and a second dimensional boundary 616 that collectively define a dimensional range in a first dimension (e.g., the z-dimension). This first dimension is the same as the dimension of interest (e.g., the z-dimension) when determining whether the image data corresponding to the profile 608 should be adjusted. In any event, the imaging-based profiler 602 may analyze image data of the background regions 610a-c that is within this dimensional range extending from the first dimensional boundary 614 to the second dimensional boundary 616 to determine a dimensional value (e.g., z-dimension, height) of the background regions 610a-c. The imaging-based profiler 502 may determine this dimensional value in any suitable manner, such as by identifying a single data point within this dimensional range and/or averaging the dimensional values of multiple data points that fall within the dimensional range.

After determining the dimensional value (e.g., z-dimension) of the background regions 610a-c, the imaging-based profiler 602 may then compare this dimensional value to a reference value to determine whether the dimensional value meets, exceeds, and/or otherwise fails to satisfy a threshold value corresponding to the reference value. If the imaging-based profiler 602 determines that the dimensional value does meet, exceed, and/or otherwise fail to satisfy the threshold value from the reference value, then the imaging-based profiler 602 may adjust/change the image data point values associated with the entire profile 608 in a direction and magnitude that is based on the direction and magnitude of the deviation of the background regions' 610a-c dimensional value from the reference value. The imaging-based profiler 602 may output the set of image data represented by the profile 608 (e.g., to external computing devices) after the adjustment/change is completed, such that each set of image data (and by proxy, each profile) output by the imaging-based profiler 602 is relatively aligned to create vibration effect-free 3D models/reconstructions of the objects represented by the sets of image data (e.g., in the object regions 612).

For example, if the background region 610a-c has a z-dimensional value of 6 mm, the reference value for background regions during the current imaging session is 10 mm, and the threshold value is 2 mm, the imaging-based profiler 602 may determine that the dimensional value of the background regions 610a-c deviates from the reference value by more than the threshold value and the profile 608 should be adjusted accordingly. The imaging-based profiler 602 may then adjust the entire profile 608 (e.g., including the background regions 610a-c and the object regions 612) by the magnitude and in the opposite direction of the deviation. Thus, in this example, the imaging-based profiler 602 may adjust the background regions 610a-c and the object regions 612 by 4 mm in the positive z-direction (e.g., up) to more closely align the background regions 610a-c and the object regions 612 with the prior sets of image data, and thereby remove the effects of vibrations from the set of image data including the profile 608. Alternatively in this example, the threshold value may be 0 mm, such that the imaging-based profiler 602 may adjust the profile 608 when the profiler 602 determines that the background regions 610a-c have a z-dimensional value that deviates from the reference value by any amount (e.g., having any non-zero magnitude).

As another example, the imaging-based profiler 602 may adjust/change the image data point values associated with the profile 608 in a direction and magnitude that is based on the direction and magnitude of the deviation of the background regions' 610a-c dimensional values from the reference value (e.g., without first determining whether the deviation meets, exceeds, and/or otherwise satisfies the threshold value). Accordingly, the imaging-based profiler 602 can adjust/change the profile 608, such that the profile 608 is aligned with the reference value, regardless of the magnitude of the deviation therefrom.

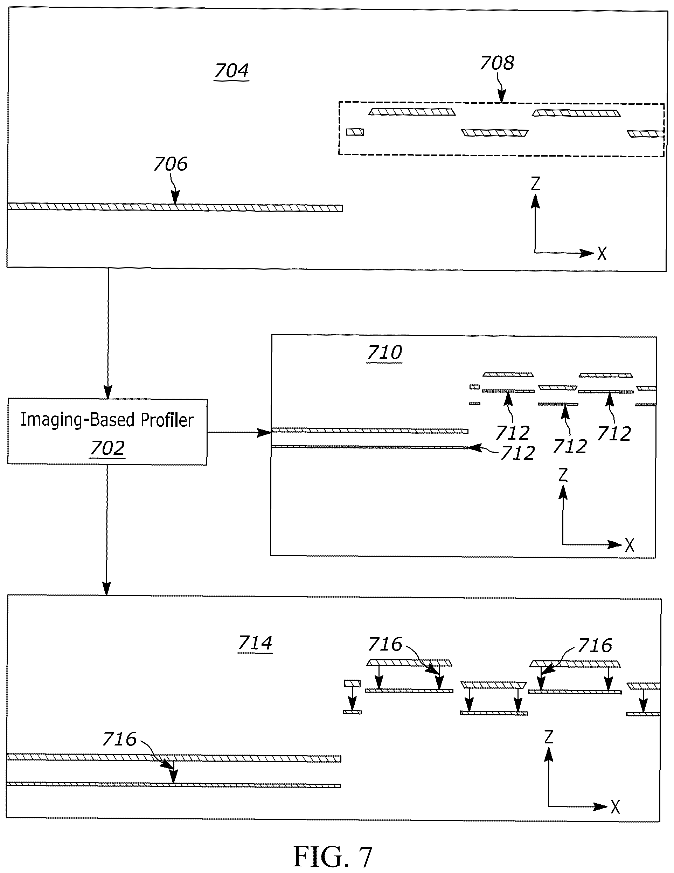

FIG. 7 illustrates the dimension adjustments on captured sets of image data performed by the imaging-based profiler 702, in accordance with various embodiments of the present disclosure. The imaging-based profiler 702 may capture a set of image data including the profile 704, which includes a background region 706 and an object region 708. The imaging-based profiler 702 may analyze this profile in accordance with one or more of the methods described herein (e.g., first method 500, second method 600), and may determine that the image data of the profile 704 should be adjusted in accordance with the deviation of the background region's 706 dimensional value (e.g., height) from the reference value.

Accordingly, the imaging-based profiler 702 may adjust the dimensional (height) values of the image data corresponding to the profile 704 to an adjusted level, as illustrated in the adjusted level 712 of the adjustment profile 710. The adjusted level 712 may represent the location of the profile 704 after the imaging-based profiler 702 adjusts the dimensional values of each point of image data included as part of the profile 704. For example, the imaging-based profiler 702 may determine that the *z*-dimension value for each pixel of image data corresponding to the profile 704 should be adjusted down by 30 pixels, such that the adjusted level 712 represents the 30-pixel negative *z*-direction adjustment the imaging-based profiler 702 performs on the image data of the profile 704.

As another example, the imaging-based profiler 702 may capture and analyze an image including a profile where each column (e.g., along the *x*-dimension) comprises an image data point value (e.g., a *z-*value, in mm) corresponding to the *z*-dimension value at the specific column. The imaging-based profiler 702 may analyze one or more of these data point values to determine the that the background region of the profile deviates from the reference value by 2 mm in the positive *z*-direction. The imaging-based profiler 702 may then adjust the image data point values for each column in the image by 2 mm in the negative *z*-direction to lower the entire profile and thereby align the image data point values of the profile's background region with the reference value. This adjustment results in an adjusted profile, which the imaging-based profiler 702 may output as a set of adjusted image data and/or an adjusted data set or data table comprising the adjusted image data point values.

The imaging-based profiler 702 may perform this adjustment and may subsequently output the adjusted profile 714 having background and object regions that are adjusted (indicated by the arrows 716) from analogous regions of the profile 704 based on the magnitude and direction of the deviation of the background region's 706 dimensional value (e.g., height) from the reference value. It should be appreciated that, while the profile 714 illustrated in FIG. 7 comprises multiple profiles, this is for the purposes of discussion only, and that sets of image data output by the imaging-based profiler 702 after adjusting for vibration effects would only include a single profile. Namely, the lower (e.g., in the negative z-direction) background and object regions in the profile 714 represent the set of image data that may be output by the imaging-based profiler 702 following adjustments in accordance with the adjustment methods described herein.

Further, it should be appreciated that the adjusted profile 714 illustrated in FIG. 7 that is output by the imaging-based profiler 702 is for the purposes of illustration/discussion only. In certain embodiments, the imaging-based profiler 702 may output the adjusted profile 714 as a data set or data table comprising a single image data point value (e.g., a *z*-value) for each column (e.g., in the*x*-dimension) of the image, and the imaging-based profiler 702 may adjust the profile 704 by adjusting the image data point value for each column by the determined deviation from the reference value.

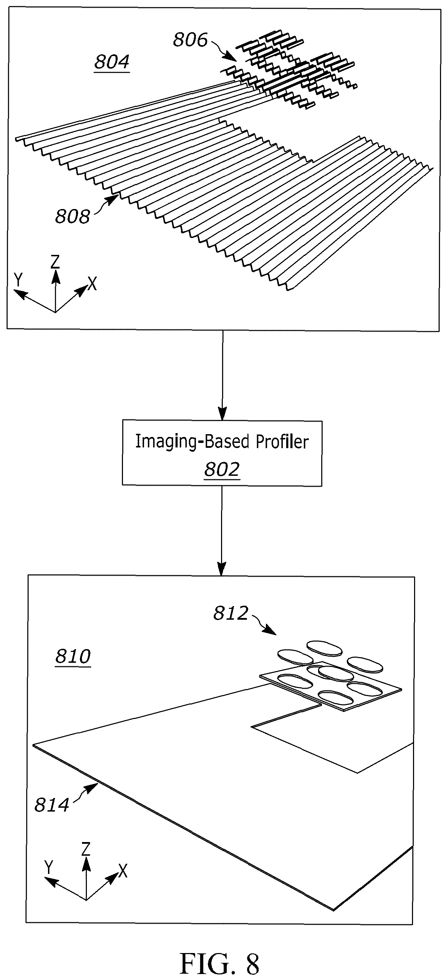

FIG. 8 illustrates the vibration effect reduction resulting from the methods applied by the imaging-based profiler, in accordance with various embodiments of the present disclosure. An imaging-based profiler 802 may initially capture sets of (e.g. raw) image data that, prior to adjustments by the profiler 802, may collectively be utilized to create an unadjusted 3D reconstruction 804 that features significant vibrational effects. In particular, the unadjusted 3D reconstruction 804 includes an object reconstruction 806 and a background reconstruction 808, both of which display a substantial amount of periodic height variations (e.g., waviness) along the *y*-dimension. These periodic height variations are not representative of the physical structure of either the background or object and are instead erroneous features generated through vibrations of the background (e.g., conveyor belt) and/or object as the object and background passed through the imaging-based profiler's 802 field of view.

As previously discussed, to remove these vibrational effects, the imaging-based profiler 802 may analyze each individual set of (e.g., raw) image data as it is captured and evaluate/adjust the sets of image data using the techniques described herein (e.g., first method 500, second method 600) prior to creation of a 3D reconstruction. As a result, the imaging-based profiler 802 may instead output sets of adjusted image data that, when assembled, create the adjusted 3D reconstruction 810. As shown, the adjusted 3D reconstruction 810 does not include the periodic height variations that are clearly visible in the unadjusted 3D reconstruction 804, and therefore offers a more accurate reconstruction of the background 814 and the object(s) 812 placed thereon.

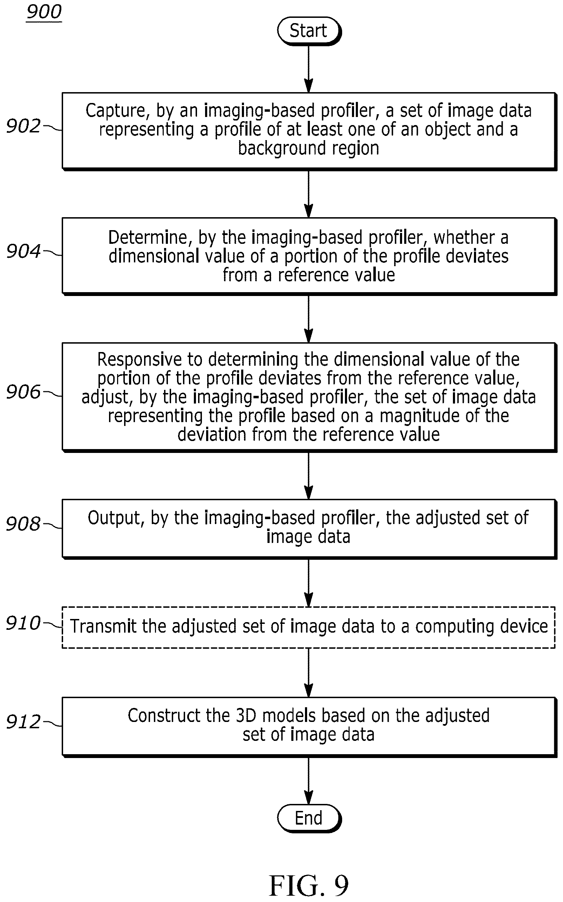

FIG. 9 is a flowchart representative of a method 900 for removing the effects of vibration in an imaging-based profiler, in accordance with embodiments described herein. It should be appreciated that the actions/functions described herein in reference to the method 900 may be performed by any suitable components described herein, such as the imaging-based profiler 104, and/or any sub-components thereof.

The method 900 includes capturing, by an imaging-based profiler, a set of image data representing a profile of at least one of an object and a background region (block 902). The method 900 further includes determining, by the imaging-based profiler, whether a dimensional value of a portion of the profile deviates from a reference value by more than a threshold value (block 904). In certain embodiments, the imaging-based profiler may adjust/change the image data point values associated with the profile in a direction and magnitude that is based on the direction and magnitude of the deviation of the captured profile's background region dimensional value from the reference value (e.g., without first determining whether the deviation meets, exceeds, and/or otherwise satisfies the threshold value). Accordingly, the imaging-based profiler can adjust/change the profile, such that the profile is aligned with the reference value, regardless of the magnitude of the deviation therefrom.

The reference value may be determined using one or more sets of (e.g., reference) image data captured by the imaging-based profiler. The method 900 further includes, responsive to determining the dimensional value of the portion of the profile deviates from the reference value by more than the threshold value, adjusting, by the imaging-based profiler, the set of image data representing the profile based on a magnitude of the deviation from the reference value (block 906). The method 900 further includes outputting, by the imaging-based profiler, the adjusted set of image data (block 908). In certain embodiments, the method 900 may further include transmitting the adjusted set of image data to a computing device (e.g., computing device 102) configured to construct 3D models based on the adjusted set of image data (block 910). The method further includes constructing the 3D models based on the adjusted set of image data (block 912).

In some embodiments, the imaging-based profiler captures the set of image data at an initiation of an imaging session, the portion of the profile is a first portion, and the method 900 may further include determining, by the imaging-based profiler, the reference value based on a second portion of the profile.

In some embodiments, the imaging-based profiler captures the set of image data during an imaging session, the set of image data is a current set of image data, the one or more sets of image data is a plurality of sets of image data, and the method 900 further includes determining, by the imaging-based profiler, the reference value based on an average value associated with background regions of the plurality of sets of image data, wherein the plurality of sets of image data does not include the current set of image data.

In some embodiments, the imaging-based profiler captures the set of image data during an imaging session, and the method 900 further includes determining, by the imaging-based profiler during the imaging session, whether a captured set of image data includes a respective background region; responsive to determining that the captured set of image data is a first set of image data to include a respective background region during the imaging session, determining, by the imaging-based profiler, the reference value based on the respective background region.

In some embodiments, the imaging-based profiler captures the set of image data during a first imaging session, and the imaging-based profiler captured the one or more sets of image data during a second imaging session that is different from the first imaging session.

In some embodiments, the dimensional value corresponds to a dimension, and determining whether the dimensional value of the portion of the profile deviates from the reference value by more than a threshold value further includes determining, by the imaging-based profiler, the background region of the profile based on a dimensional range corresponding to the dimension, the dimensional range including pixels of the set of image data associated with the background region; and determining, by the imaging-based profiler, the dimensional value of the portion using image data from the set of image data that is included within the dimensional range.

In some embodiments, the dimensional value corresponds to a first dimension, and the dimensional range corresponds to a second dimension that is different from the first dimension.

In some embodiments, determining the dimensional value further includes determining, by the imaging-based profiler, the dimensional value based on (i) an average value of the portion within the dimensional range or (ii) a single value of the portion within the dimensional range.

In some embodiments, the method 900 further includes determining, by the imaging-based profiler, a tilt value of the background region based on variations of the dimensional value across a length of the background region; adjusting, by the imaging-based profiler, the tilt value of the background region to a reduced tilt value; and determining, by the imaging-based profiler, the dimensional value based on the reduced tilt value.

In the foregoing specification, specific embodiments have been described. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of present teachings.

The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

Moreover, in this document, relational terms such as first and second, top and bottom, and the like may be used solely to distinguish one entity or action from another entity or action without necessarily requiring or implying any actual such relationship or order between such entities or actions. The terms "comprises," "comprising," "has", "having," "includes", "including," "contains", "containing" or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus. An element proceeded by "comprises ...a", "has ...a", "includes ...a", "contains ...a" does not, without more constraints, preclude the existence of additional identical elements in the process, method, article, or apparatus that comprises, has, includes, contains the element. The terms "a" and "an" are defined as one or more unless explicitly stated otherwise herein. The terms "substantially", "essentially", "approximately", "about" or any other version thereof, are defined as being close to as understood by one of ordinary skill in the art, and in one non-limiting embodiment the term is defined to be within 10%, in another embodiment within 5%, in another embodiment within 1% and in another embodiment within 0.5%. The term "coupled" as used herein is defined as connected, although not necessarily directly and not necessarily mechanically. A device or structure that is "configured" in a certain way is configured in at least that way, but may also be configured in ways that are not listed. The term "may" is defined as equivalent to the term "can".

Certain expressions may be employed herein to list combinations of elements. Examples of such expressions include: "at least one of A, B, and C"; "one or more of A, B, and C"; "at least one of A, B, or C"; "one or more of A, B, or C". Unless expressly indicated otherwise, the above expressions encompass any combination of A and/or B and/or C.

It will be appreciated that some embodiments may be comprised of one or more specialized processors (or "processing devices") such as microprocessors, digital signal processors, customized processors and field programmable gate arrays (FPGAs) and unique stored program instructions (including both software and firmware) that control the one or more processors to implement, in conjunction with certain non-processor circuits, some, most, or all of the functions of the method and/or apparatus described herein. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used.

Moreover, an embodiment can be implemented as a computer-readable storage medium having computer readable code stored thereon for programming a computer (e.g., comprising a processor) to perform a method as described and claimed herein. Examples of such computer-readable storage mediums include, but are not limited to, a hard disk, a CD-ROM, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory) and a Flash memory. Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separately claimed subject matter.

The following examples also form part of the present disclosure:
1. A method, comprising:
   capturing, by an imaging-based profiler, a set of image data representing a profile of at least one of an object and a background region;
   determining, by the imaging-based profiler, whether a dimensional value of a portion of the profile deviates from a reference value, the reference value being determined using one or more sets of image data captured by the imaging-based profiler;
   responsive to determining the dimensional value of the portion of the profile deviates from the reference value, adjusting, by the imaging-based profiler, the set of image data representing the profile based on a magnitude of the deviation from the reference value; and
   outputting, by the imaging-based profiler, the adjusted set of image data.
2. The method of example 1, wherein the imaging-based profiler captures the set of image data at an initiation of an imaging session, the portion of the profile is a first portion, and the method further comprises:
   determining, by the imaging-based profiler, the reference value based on a second portion of the profile.
3. The method of example 1, wherein the imaging-based profiler captures the set of image data during an imaging session, the set of image data is a current set of image data, the one or more sets of image data is a plurality of sets of image data, and the method further comprises:
   determining, by the imaging-based profiler, the reference value based on an average value associated with background regions of the plurality of sets of image data, wherein the plurality of sets of image data does not include the current set of image data.
4. The method of example 1, wherein the imaging-based profiler captures the set of image data during an imaging session, and the method further comprises:
   determining, by the imaging-based profiler during the imaging session, whether a captured set of image data includes a respective background region;
   responsive to determining that the captured set of image data is a first set of image data to include a respective background region during the imaging session, determining, by the imaging-based profiler, the reference value based on the respective background region.
5. The method of example 1, wherein the imaging-based profiler captures the set of image data during a first imaging session, and the imaging-based profiler captures the one or more sets of image data during a second imaging session that is different from the first imaging session.
6. The method of example 1, wherein the dimensional value corresponds to a dimension, and determining whether the dimensional value of the portion of the profile deviates from the reference value further comprises:
   determining, by the imaging-based profiler, the background region of the profile based on a dimensional range corresponding to the dimension, the dimensional range including pixels of the set of image data associated with the background region; and
   determining, by the imaging-based profiler, the dimensional value of the portion using image data from the set of image data that is included within the dimensional range.
7. The method of example 6, wherein the dimensional value corresponds to a first dimension, and the dimensional range corresponds to a second dimension that is different from the first dimension.
8. The method of example 6, wherein determining the dimensional value further comprises:
   determining, by the imaging-based profiler, the dimensional value based on (i) an average value of the portion within the dimensional range or (ii) a single value of the portion within the dimensional range.
9. The method of example 1, further comprising:
   determining, by the imaging-based profiler, a tilt value of the background region based on variations of the dimensional value across a length of the background region;
   adjusting, by the imaging-based profiler, the tilt value of the background region to a reduced tilt value; and
   determining, by the imaging-based profiler, the dimensional value based on the reduced tilt value.
10. The method of example 1, wherein the imaging-based profiler:
   determines whether the dimensional value of the portion of the profile deviates from the reference value by more than a threshold value, and
   adjusts the set of image data representing the profile based on a magnitude of the deviation from the reference value responsive to determining the dimensional value of the portion of the profile deviates from the reference value by more than the threshold value.
11. The method of example 1, further comprising: constructing a three-dimensional (3D) model based on the adjusted set of image data.
12. A device, comprising:
   an imaging assembly;
   one or more processors; and
   a non-transitory computer-readable memory coupled to the one or more processors, the memory storing instructions thereon that, when executed by the one or more processors, cause the one or more processors to:
      capture, by the imaging assembly, a set of image data representing a profile of at least one of an object and a background region,
      determine whether a dimensional value of a portion of the profile deviates from a reference value, the reference value being determined using one or more sets of image data captured using the imaging assembly,
      responsive to determining the dimensional value of the portion of the profile deviates from the reference value, adjust the set of image data representing the profile based on a magnitude of the deviation from the reference value, and
      output the adjusted set of image data.
13. The device of example 12, wherein the imaging assembly captures the set of image data at an initiation of an imaging session, the portion of the profile is a first portion, and wherein the instructions, when executed, further cause the one or more processors to:
   determine the reference value based on a second portion of the profile.
14. The device of example 12, wherein the imaging assembly captures the set of image data during an imaging session, the set of image data is a current set of image data, the one or more sets of image data is a plurality of sets of image data, and wherein the instructions, when executed, further cause the one or more processors to:
   determine the reference value based on an average value associated with background regions of the plurality of sets of image data, wherein the plurality of sets of image data does not include the current set of image data.
15. The device of example 12, wherein the imaging assembly captures the set of image data during an imaging session, and wherein the instructions, when executed, further cause the one or more processors to:
   determine, during the imaging session, whether a captured set of image data includes a respective background region;
   responsive to determining that the captured set of image data is a first set of image data to include a respective background region during the imaging session, determine the reference value based on the respective background region.
16. The device of example 12, wherein the imaging assembly captures the set of image data during a first imaging session, and the imaging assembly captured the one or more sets of image data during a second imaging session that is different from the first imaging session.
17. The device of example 12, wherein the dimensional value corresponds to a dimension, and determining whether the dimensional value of the portion of the profile deviates from the reference value further comprises:
   determining the background region of the profile based on a dimensional range corresponding to the dimension, the dimensional range including pixels of the set of image data associated with the background region; and
   determining the dimensional value of the portion using image data from the set of image data that is included within the dimensional range.
18. The device of example 17, wherein the dimensional value corresponds to a first dimension, and the dimensional range corresponds to a second dimension that is different from the first dimension.
19. The device of example 17, wherein determining the dimensional value further comprises:
   determining the dimensional value based on (i) an average value of the portion within the dimensional range or (ii) a single value of the portion within the dimensional range.
20. The device of example 12, wherein the instructions, when executed, further cause the one or more processors to:
   determine a tilt value of the background region based on variations of the dimensional value across a length of the background region;
   adjust the tilt value of the background region to a reduced tilt value; and
   determine the dimensional value based on the reduced tilt value.
21. The device of example 12, wherein the instructions, when executed, further cause the one or more processors to:
   construct a three-dimensional (3D) model based on the adjusted set of image data
22. A non-transitory computer-readable medium storing instructions thereon that, when executed by one or more processors, cause the one or more processors to:
   capture a set of image data representing a profile of at least one of an object and a background region;
   determine whether a dimensional value of a portion of the profile deviates from a reference value, the reference value being determined using one or more sets of image data;
   responsive to determining the dimensional value of the portion of the profile deviates from the reference value, adjust the set of image data representing the profile based on a magnitude of the deviation from the reference value; and
   output the adjusted set of image data.

## Claims

1. A method, comprising:
capturing, by an imaging-based profiler, a set of image data representing a profile of at least one of an object and a background region;
determining, by the imaging-based profiler, whether a dimensional value of a portion of the profile deviates from a reference value, the reference value being determined using one or more sets of image data captured by the imaging-based profiler;
responsive to determining the dimensional value of the portion of the profile deviates from the reference value, adjusting, by the imaging-based profiler, the set of image data representing the profile based on a magnitude of the deviation from the reference value; and
outputting, by the imaging-based profiler, the adjusted set of image data.

2. The method of claim 1, wherein the imaging-based profiler captures the set of image data at an initiation of an imaging session, the portion of the profile is a first portion, and the method further comprises:
determining, by the imaging-based profiler, the reference value based on a second portion of the profile.

3. The method of any one of the preceding claims, wherein the imaging-based profiler captures the set of image data during an imaging session, the set of image data is a current set of image data, the one or more sets of image data is a plurality of sets of image data, and the method further comprises:
determining, by the imaging-based profiler, the reference value based on an average value associated with background regions of the plurality of sets of image data, wherein the plurality of sets of image data does not include the current set of image data.

4. The method of any one of the preceding claims, wherein the imaging-based profiler captures the set of image data during an imaging session, and the method further comprises:
determining, by the imaging-based profiler during the imaging session, whether a captured set of image data includes a respective background region;
responsive to determining that the captured set of image data is a first set of image data to include a respective background region during the imaging session, determining, by the imaging-based profiler, the reference value based on the respective background region.

5. The method of any one of the preceding claims, wherein the imaging-based profiler captures the set of image data during a first imaging session, and the imaging-based profiler captures the one or more sets of image data during a second imaging session that is different from the first imaging session.

6. The method of any one of the preceding claims, wherein the dimensional value corresponds to a dimension, and determining whether the dimensional value of the portion of the profile deviates from the reference value further comprises:
determining, by the imaging-based profiler, the background region of the profile based on a dimensional range corresponding to the dimension, the dimensional range including pixels of the set of image data associated with the background region; and
determining, by the imaging-based profiler, the dimensional value of the portion using image data from the set of image data that is included within the dimensional range.

7. The method of any one of the preceding claims, wherein the dimensional value corresponds to a first dimension, and the dimensional range corresponds to a second dimension that is different from the first dimension.

8. The method of any one of the preceding claims, wherein determining the dimensional value further comprises:
determining, by the imaging-based profiler, the dimensional value based on (i) an average value of the portion within the dimensional range or (ii) a single value of the portion within the dimensional range.

9. The method of any one of the preceding claims, further comprising:
determining, by the imaging-based profiler, a tilt value of the background region based on variations of the dimensional value across a length of the background region;
adjusting, by the imaging-based profiler, the tilt value of the background region to a reduced tilt value; and
determining, by the imaging-based profiler, the dimensional value based on the reduced tilt value.

10. The method of any one of the preceding claims, wherein the imaging-based profiler:
determines whether the dimensional value of the portion of the profile deviates from the reference value by more than a threshold value, and
adjusts the set of image data representing the profile based on a magnitude of the deviation from the reference value responsive to determining the dimensional value of the portion of the profile deviates from the reference value by more than the threshold value.

11. The method of any one of the preceding claims, further comprising: constructing a three-dimensional (3D) model based on the adjusted set of image data.

12. A device, comprising:
an imaging assembly;
one or more processors; and
a non-transitory computer-readable memory coupled to the one or more processors, the memory storing instructions thereon that, when executed by the one or more processors, cause the one or more processors to:
capture, by the imaging assembly, a set of image data representing a profile of at least one of an object and a background region,
determine whether a dimensional value of a portion of the profile deviates from a reference value, the reference value being determined using one or more sets of image data captured using the imaging assembly,
responsive to determining the dimensional value of the portion of the profile deviates from the reference value, adjust the set of image data representing the profile based on a magnitude of the deviation from the reference value, and
output the adjusted set of image data.

13. The device of claim 12,
wherein the imaging assembly captures the set of image data at an initiation of an imaging session, the portion of the profile is a first portion, and wherein the instructions, when executed, further cause the one or more processors to:
determine the reference value based on a second portion of the profile; and/or
wherein the imaging assembly captures the set of image data during an imaging session, the set of image data is a current set of image data, the one or more sets of image data is a plurality of sets of image data, and wherein the instructions, when executed, further cause the one or more processors to:
determine the reference value based on an average value associated with background regions of the plurality of sets of image data, wherein the plurality of sets of image data does not include the current set of image data; and/or
wherein the imaging assembly captures the set of image data during an imaging session, and wherein the instructions, when executed, further cause the one or more processors to:
determine, during the imaging session, whether a captured set of image data includes a respective background region;
responsive to determining that the captured set of image data is a first set of image data to include a respective background region during the imaging session, determine the reference value based on the respective background region; and/or
wherein the imaging assembly captures the set of image data during a first imaging session, and the imaging assembly captured the one or more sets of image data during a second imaging session that is different from the first imaging session.

14. The device of any one of claims 12 to 13,
wherein the dimensional value corresponds to a dimension, and determining whether the dimensional value of the portion of the profile deviates from the reference value further comprises:
determining the background region of the profile based on a dimensional range corresponding to the dimension, the dimensional range including pixels of the set of image data associated with the background region; and
determining the dimensional value of the portion using image data from the set of image data that is included within the dimensional range; and/or
wherein the dimensional value corresponds to a first dimension, and the dimensional range corresponds to a second dimension that is different from the first dimension; and/or
wherein determining the dimensional value further comprises:
determining the dimensional value based on (i) an average value of the portion within the dimensional range or (ii) a single value of the portion within the dimensional range.

15. A non-transitory computer-readable medium storing instructions thereon that, when executed by one or more processors, cause the one or more processors to:
capture a set of image data representing a profile of at least one of an object and a background region;
determine whether a dimensional value of a portion of the profile deviates from a reference value, the reference value being determined using one or more sets of image data;
responsive to determining the dimensional value of the portion of the profile deviates from the reference value, adjust the set of image data representing the profile based on a magnitude of the deviation from the reference value; and
output the adjusted set of image data.
